# EUROPEAN PATENT APPLICATION

(11) **EP 4 362 139 A1**
(43) Date of publication of application: **01.05.2024**
(21) Application number: 22891724.1
(22) Date of filing: 12.10.2022
(51) Int. Cl.: H01M 4/62, H01M 4/131

(54) **POSITIVE ELECTRODE MATERIAL, POSITIVE ELECTRODE PLATE, SECONDARY BATTERY, BATTERY MODULE, BATTERY PACK, AND ELECTRICAL DEVICE**

(30) Priority: 12.11.2021 CN 202111341064
(71) Applicant: Contemporary Amperex Technology Co., Limited, Ningde, Fujian 352100 (CN)
(72) Inventor: ZHUANG, Zaiyu, Ningde, Fujian 352100 (CN); WU, Yale, Ningde, Fujian 352100 (CN); ZHANG, Ming, Ningde, Fujian 352100 (CN); ZHANG, Tongxian, Ningde, Fujian 352100 (CN)
(74) Representative: Gong, Jinping
(86) International application number: PCT/CN2022/124966
(87) International publication number: WO 2023/082925

(57) **Abstract**

The present application provides a positive electrode material, a positive electrode plate, a secondary battery, a battery module, a battery pack, and an electrical apparatus. The positive electrode material comprises a manganese-containing active material and a functionalized carbon nanotube, where a surface of the functionalized carbon nanotube comprises lone pair electrons. The lone pair electrons on the surface of the functionalized carbon nanotube have a strong coordination capability. During charging and discharging of the secondary battery, the lone pair electrons can form a coordination structure with Mn²⁺ dissolved from the manganese-containing active material, to reduce the dissolution of the Mn²⁺, thereby improving a manganese dissolution phenomenon of the secondary battery, and then improving cycling performance of the secondary battery.

## Description

### CROSS-REFERENCE TO RELATED APPLICATIONS

The present application claims priority to Chinese Patent Application No. 202111341064.4 titled "POSITIVE ELECTRODE MATERIAL, POSITIVE ELECTRODE PLATE, SECONDARY BATTERY, BATTERY MODULE, BATTERY PACK, AND ELECTRICAL APPARATUS" submitted on 12 November 2021, the entire contents of which are incorporated herein by reference.

### TECHNICAL FIELD

The present application relates to the technical field of electrochemistry, and particularly relates to a positive electrode active material, a positive electrode plate, a secondary battery, a battery module, a battery pack, and an electrical apparatus.

### BACKGROUND

Characterized by advantages, such as high energy storage density, high open-circuit voltage, low self-discharge rate, long cycle life, and good safety, lithium-ion batteries have been widely used in various fields such as portable electric energy storage, electronic devices, and electric vehicles. However, higher requirements are also presented for comprehensive performance of the lithium-ion batteries, for example, the lithium-ion batteries shall have, e.g., good cycling performance.

A positive electrode material in the lithium-ion batteries is one of the important factors affecting the performance of the lithium-ion batteries, where the manganese-containing active material is widely used in the lithium-ion batteries. During charging and discharging of the lithium-ion batteries, manganese in the manganese-containing active material will have a disproportionation reaction, thus dissolving Mn²⁺ in an electrolyte solution, where the Mn²⁺ will migrate to a negative electrode and be reduced to Mn, thus resulting in irreversible losses of the positive electrode material, and then affecting the cycling performance of the lithium-ion batteries.

### SUMMARY OF THE INVENTION

In view of the above problems, an object of the present application is to improve a manganese dissolution phenomenon of secondary batteries, and then improve cycling performance of the secondary batteries.

In order to achieve the above object, the present application provides a positive electrode material, a positive electrode plate, a secondary battery, a battery module, a battery pack, and an electrical apparatus.

A first aspect of the present application provides a positive electrode material, comprising a manganese-containing active material and a functionalized carbon nanotube, a surface of the functionalized carbon nanotube comprising lone pair electrons. The lone pair electrons on the surface of the functionalized carbon nanotube have a strong coordination capability. During charging and discharging of the secondary battery, the lone pair electrons can form a coordination structure with Mn²⁺ dissolved from the manganese-containing active material, to reduce the dissolution of the Mn²⁺, thereby improving a manganese dissolution phenomenon of the secondary battery, and then improving cycling performance of the secondary battery.

In any embodiment, a mass ratio of the functionalized carbon nanotube to the manganese-containing active material is from 0.0005:1 to 0.004:1, and is preferably from 0.001:1 to 0.003:1. The mass ratio of the functionalized carbon nanotube to the manganese-containing active material is regulated to be within the above range, thereby contributing to improving both the cycling performance and energy density of the secondary battery.

In any embodiment, the functionalized carbon nanotube includes a carboxylated carbon nanotube and/or an aminoated carbon nanotube. There are many lone pair electrons on the surface of the functionalized carbon nanotube, thereby effectively capturing the dissolved Mn²⁺, forming a coordination structure therewith, and improving the cycling performance of the secondary battery.

In any embodiment, a functionalization degree of the functionalized carbon nanotube is from 0.1% to 6%, and is preferably from 2% to 5%. The functionalization degree of the functionalized carbon nanotube is regulated to be within the above range, thereby contributing to improving the storage performance of the secondary battery, and reducing impedance of the secondary battery.

In any embodiment, a length-diameter ratio of the functionalized carbon nanotube is from 200 to 20,000, and is preferably from 1,000 to 5,000. The length-diameter ratio of the functionalized carbon nanotube is regulated to be within the above range, thereby contributing to improving the cycling performance and storage performance of the secondary battery, and reducing the impedance of the secondary battery.

In any embodiment, a tube diameter of the functionalized carbon nanotube is from 1 nm to 100 nm, and is preferably from 3 nm to 80 nm. The tube diameter of the functionalized carbon nanotube is regulated to be within the above range, thereby contributing to improving the cycling performance and storage performance of the secondary battery, and reducing the impedance of the secondary battery.

In any embodiment, a length of the functionalized carbon nanotube is from 0.1 µm to 50 µm, and is preferably from 3 µm to 30 µm. A length ratio of the functionalized carbon nanotube is regulated to be within the above range, thereby contributing to improving the cycling performance and storage performance of the secondary battery, and reducing the impedance of the secondary battery.

In any embodiment, a specific surface area of the functionalized carbon nanotube is from 50 m²/g to 2,000 m²/g, and is preferably from 300 m²/g to 1,000 m²/g. The specific surface area of the functionalized carbon nanotube is regulated to be within the above range, thereby contributing to improving the cycling performance and storage performance of the secondary battery, and reducing the impedance of the secondary battery.

In any embodiment, the manganese-containing active material comprises particles with Dv50 from 50 nm to 99 nm that can be intercalated in a tube cavity of the functionalized carbon nanotube. thereby contributing to capturing the dissolved Mn²⁺ by the functionalized carbon nanotube, forming a coordination structure therewith, and improving the cycling performance of the secondary battery.

In any embodiment, the manganese-containing active material comprises at least one of LiCoₓ₁Mn_{y1}Ni_{1-x1-y1}O₂, x₂Li[Li_{1/3}Mn_{2/3}]O₂(1-x₂)LiMO₂, LiMn₂O₄, or LiNi_{0.5}Mn_{1.5}O₄, where 0<x1<1, 0<y1<1, 0<x1+y1<1, 0≤x₂≤1, and M is Ni, Co, or Mn. The above manganese-containing active material is selected, thereby contributing to forming a synergistic effect with the functionalized carbon nanotube, improving the manganese dissolution phenomenon of the secondary battery, and then improving the cycling performance of the secondary battery.

A second aspect of the present application provides a positive electrode plate, comprising a positive electrode material layer, the positive electrode material layer comprising the positive electrode material in the first aspect of the present application, where a percentage mass content of the manganese-containing active material is from 95.7% to 96.05%, and a percentage mass content of the functionalized carbon nanotube is from 0.05% to 0.4%, based on a mass of the positive electrode material layer. The percentage mass content of the manganese-containing active material and the percentage mass content of the functionalized carbon nanotube are regulated to be within the above range, thereby contributing to improving the manganese dissolution phenomenon of the secondary battery, and improving the cycling performance of the secondary battery. Further, due to good conductivity, the functionalized carbon nanotube has the effect of a conductive agent, and can reduce a use amount of a conductive agent in the positive electrode material layer.

A third aspect of the present application provides a secondary battery, comprising the positive electrode plate in the second aspect of the present application.

A fourth aspect of the present application provides a battery module, comprising the secondary battery in the third aspect of the present application.

A fifth aspect of the present application provides a battery pack, comprising the battery module in the fourth aspect of the present application.

A sixth aspect of the present application provides an electrical apparatus, comprising the secondary battery in the third aspect of the present application, the battery module in the fourth aspect of the present application, or the battery pack in the fifth aspect of the present application.

The beneficial effects of the present application include:
the present application provides a positive electrode material, comprising a manganese-containing active material and a functionalized carbon nanotube, a surface of the functionalized carbon nanotube comprising lone pair electrons. The applicant finds that the lone pair electrons on the surface of the functionalized carbon nanotube have a strong coordination capability. During charging and discharging of the secondary battery, the lone pair electrons can form a coordination structure with Mn²⁺ dissolved from the manganese-containing active material, to reduce the dissolution of the Mn²⁺, thereby improving manganese dissolution phenomenon of the secondary battery. Further, a coordination bond formed by the Mn²⁺ with carboxyl and amino on the surface of the carbon nanotube has a dihedral angle *φ* of 180°, and has a conjugated structure. This coplanar conjugated structure promotes the Mn²⁺ to form a strong electric contact with the carboxyl and amino, thereby reducing energy level difference between a highest occupied orbit and a lowest empty orbit of a coordination node. The strong electric contact is equivalent to building a "bridge for electron transmission" between carbon nanotubes, to increase electron transmission paths between the carbon nanotubes, accelerate electron transmission, and ultimately improve conductivity of the carbon nanotubes, thereby reducing resistance of the positive electrode material layer, and further improving cycling performance of the secondary battery.

### DESCRIPTION OF DRAWINGS

To more clearly describe the technical solutions in the present application and the prior art, the accompany drawings to be used in examples and the prior art will be briefly introduced below. Apparently, the drawings in the description below are merely some examples of the present application.
Fig. 1 is a schematic view of a secondary battery according to an embodiment of the present application;
Fig. 2 is an exploded view of the secondary battery according to an embodiment of the present application shown in Fig. 1;
Fig. 3 is a schematic view of a battery module according to an embodiment of the present application;
Fig. 4 is a schematic view of a battery pack according to an embodiment of the present application;
Fig. 5 is an exploded view of the battery pack according to an embodiment of the present application shown in Fig. 4;
Fig. 6 is a schematic view of an electrical apparatus in which a secondary battery is used as a power source according to an embodiment of the present application;
Fig. 7 is an infrared spectrogram of a single-walled carbon nanotube and a carboxylated carbon nanotube according to an embodiment of the present application;
Fig. 8 is an X-ray photoelectron spectroscopy of the single-walled carbon nanotube; and
Fig. 9 is an X-ray photoelectron spectroscopy of the carboxylated carbon nanotube in Example 2-3.

### DETAILED DESCRIPTION

Hereinafter, embodiments of the negative electrode plate, the positive electrode plate, the secondary battery, the battery module, the battery pack, and the electrical apparatus of the present application are specifically disclosed with reference to the detailed description of drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower and upper limits define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and preferable embodiments of the present application may be combined with each other to form new technical solutions.

Unless otherwise specifically stated, all technical features and preferable technical features of the present application may be combined with each other to form new technical solutions.

Unless otherwise specifically stated, all steps in the present application may be performed sequentially or may be performed randomly, and are preferably performed sequentially. For example, the method includes steps (a) and (b), which means that the method may include steps (a) and (b) performed sequentially, or may include steps (b) and (a) performed sequentially. For example, the reference to the method may further comprise step (c), which means that step (c) may be added to the method in any order, for example, the method may comprise steps (a), (b) and (c), or may comprise steps (a), (c) and (b), or may comprise steps (c), (a) and (b), and so on.

Unless otherwise specifically stated, the terms "include/including" and "comprise/comprising" mentioned in the present application may be open-ended, or may be closed-ended. For example, the "including" and "comprising" may mean that other components that are not listed are further included or comprised, or only the listed components are included or comprised.

Unless otherwise specifically stated, the term "or" is inclusive in the present application. By way of example, the phrase "A or B" means "A, B, or both A and B". More specifically, the condition "A or B" is satisfied under any one of the following conditions: A is true (or present) and B is false (or absent); A is false (or absent) and B is true (or present); or both A and B are true (or present).

The applicant finds in research processes that during charging and discharging of the secondary battery (e.g., a lithium-ion battery), manganese in the manganese-containing active material will have a disproportionation reaction, thus dissolving Mn²⁺ in an electrolyte solution, where the Mn²⁺ will migrate to a negative electrode and be reduced to Mn, thus resulting in irreversible losses of the positive electrode material, and then affecting the cycling performance of the secondary battery. In order to improve manganese dissolution phenomenon of the secondary battery, improve cycling performance of the secondary battery, and enable the secondary battery to have better performance, such as longer range and longer service life, when being applied to an electrical apparatus, the present application provides a positive electrode material, a positive electrode plate, a secondary battery, a battery module, a battery pack, and an electrical apparatus.

It should be noted that in specific embodiments of the present application, the present application is interpreted with the lithium-ion battery as an example of the secondary battery, but the secondary battery of the present application is not limited to the lithium-ion battery.

In an embodiment of the present application, the present application provides a positive electrode material, comprising a manganese-containing active material and a functionalized carbon nanotube, a surface of the functionalized carbon nanotube comprising lone pair electrons.

While the mechanism is not clear yet, the applicant unexpectedly finds that the lone pair electrons on the surface of the functionalized carbon nanotube have a strong coordination capability. During charging and discharging of the secondary battery, the lone pair electrons can form a coordination structure with Mn²⁺ dissolved from the manganese-containing active material, to reduce the dissolution of the Mn²⁺ and the content entering the electrolyte solution, and inhibit manganese deposition on the negative electrode, thereby improving the manganese dissolution phenomenon of the secondary battery. Further, a coordination bond formed by the Mn²⁺ with carboxyl and amino on the surface of the carbon nanotube has a dihedral angle *φ* of 180°, and has a conjugated structure. This coplanar conjugated structure promotes the Mn²⁺ to form a strong electric contact with the carboxyl and amino, thereby reducing energy level difference between a highest occupied orbit and a lowest empty orbit of a coordination node. The strong electric contact is equivalent to building a "bridge for electron transmission" between carbon nanotubes, to increase electron transmission paths between the carbon nanotubes, accelerate electron transmission, and ultimately improve conductivity of the carbon nanotubes, thereby reducing resistance of the positive electrode material layer, and further improving cycling performance of the secondary battery. In addition, the amount of metal manganese deposited on the negative electrode is reduced to improve the problem of growing solid electrolyte interface and reduce impedance of the secondary battery, thereby contributing to improving the storage performance and rate performance of the secondary battery.

In some embodiments, a mass ratio of the functionalized carbon nanotube to the manganese-containing active material is from 0.0005:1 to 0.004:1, and is preferably from 0.001:1 to 0.003:1. The applicant finds that when the mass ratio of the functionalized carbon nanotube to the manganese-containing active material is too small (e.g., less than 0.0005:1), the content of the functionalized carbon nanotube is too low to significantly improve the manganese dissolution phenomenon of the secondary battery; while when the mass ratio of the functionalized carbon nanotube to the manganese-containing active material is too large (e.g., larger than 0.004:1), the content of the manganese-containing active material is reduced, which will affect energy density of the secondary battery. The mass ratio of the functionalized carbon nanotube to the manganese-containing active material is regulated to be within the above range, thereby contributing to improving both the cycling performance and energy density of the secondary battery.

In some embodiments, the functionalized carbon nanotube includes a carboxylated carbon nanotube and/or an aminoated carbon nanotube. The Mn²⁺ forms a conjugated structure with the carboxyl on the surface of the carboxyated carbon nanotube or the amino on the surface of the aminated carbon nanotube, so that the Mn²⁺ forms a strong electric contact with the carboxyl or the amino, thereby effectively capturing the dissolved Mn²⁺, forming a coordination structure therewith, and improving the cycling performance of the secondary battery; and this strong electric contact increases electron transmission paths between functionalized carbon nanotubes, and accelerates electron transmission, thereby improving conductivity of the carbon nanotubes, reducing internal resistance of the secondary battery, and improving the rate performance of the secondary battery and capacity of the manganese-containing active material. When the functionalized carbon nanotube includes both the carboxylated carbon nanotube and the aminated carbon nanotube, a content relationship between the two is not particularly limited in the present application, as long as the objective of the present application can be achieved. For example, a mass ratio of the carboxylated carbon nanotube to the aminated carbon nanotube is 3:1.

In some embodiments, a functionalization degree of the functionalized carbon nanotube is from 0.1% to 6%, and is preferably from 2% to 5%. The functionalization degree of the functionalized carbon nanotube directly affects the number of lone pair electrons on the surface of the functionalized carbon nanotube, and then affects an improvement degree of the manganese dissolution phenomenon. Therefore, when the functionalization degree of the functionalized carbon nanotube is too low (e.g., lower than 0.1%), the number of lone pair electrons on the surface of the functionalized carbon nanotube is too small to significantly improve the manganese dissolution phenomenon of the secondary battery. However, when the functionalization degree of the functionalized carbon nanotube is too high (e.g., higher than 6%), the structure of the functionalized carbon nanotube will be damaged, and the conductivity of the functionalized carbon nanotube will be affected, thereby increasing the internal resistance of the secondary battery. The functionalization degree of the functionalized carbon nanotube is regulated to be within the above range, to capture the dissolved Mn²⁺ to the greatest extent, and improve the solid electrolyte interfacial film damaged by the metal manganese deposited on the negative electrode, thereby contributing to reducing the impedance of the secondary battery, improving the cycling performance of the secondary battery, giving full play to the effect of the strong electric contact formed between the Mn²⁺ and the carboxyl or the amino, contributing to improving the storage performance of the secondary battery, and reducing the impedance of the secondary battery. In the present application, the functionalization degree refers to a percentage mass content of a functional group in the functionalized carbon nanotube, based on a mass of the functionalized carbon nanotube. For example, the functionalization degree of the carboxylated carbon nanotube refers to a percentage mass content of the carboxyl based on a mass of the carboxylated carbon nanotube, of which a specific test process is shown in the Test.

In some embodiments, a length-diameter ratio of the functionalized carbon nanotube is from 200 to 20,000, and is preferably from 1,000 to 5,000. The applicant finds that when the length-diameter ratio of the functionalized carbon nanotube is too small (e.g., smaller than 200), the functionalized carbon nanotube tends to agglomerate, and therefore can hardly effectively capture the Mn²⁺; and further, contact sites between the functionalized carbon nanotube and the manganese-containing active material will be reduced, thereby increasing the internal resistance of the secondary battery. When the length-diameter ratio of the functionalized carbon nanotube is too large (e.g., larger than 20,000), the functionalized carbon nanotube tends to be entangled, thereby affecting the internal resistance and cycling performance of the secondary battery. The length-diameter ratio of the functionalized carbon nanotube is regulated to be within the above range, to effectively improve the manganese dissolution phenomenon of the secondary battery, and improve the problem of the solid electrolyte interfacial film damaged by the metal manganese deposited on the negative electrode, thereby contributing to improving the cycling performance and storage performance of the secondary battery, and reducing the impedance of the secondary battery.

In some embodiments, a tube diameter of the functionalized carbon nanotube is from 1 nm to 100 nm, and is preferably from 3 nm to 80 nm. The applicant finds that when the tube diameter of the functionalized carbon nanotube is too small (e.g., smaller than 1 nm), the functionalized carbon nanotube tends to agglomerate, and therefore can hardly effectively capture the Mn²⁺; and further, contact sites between the functionalized carbon nanotube and the manganese-containing active material will be reduced, thereby increasing the internal resistance of the secondary battery. When the tube diameter of the functionalized carbon nanotube is too large (e.g., larger than 100 nm), the functionalized carbon nanotube tends to be entangled, thereby affecting the internal resistance and cycling performance of the secondary battery. The tube diameter of the functionalized carbon nanotube is regulated to be within the above range, to effectively improve the manganese dissolution phenomenon of the secondary battery, and improve the problem of the solid electrolyte interfacial film damaged by the metal manganese deposited on the negative electrode, thereby contributing to improving the cycling performance and storage performance of the secondary battery, and reducing the impedance of the secondary battery.

In some embodiments, a length of the functionalized carbon nanotube is from 0.1 µm to 50 µm, and is preferably from 3 µm to 30 µm. The applicant finds that when the length of the functionalized carbon nanotube is too small (e.g., smaller than 0.1 µm), the functionalized carbon nanotube tends to agglomerate, and therefore can hardly effectively capture the Mn²⁺; and further, contact sites between the functionalized carbon nanotube and the manganese-containing active material will be reduced, thereby increasing the internal resistance of the secondary battery. When the length of the functionalized carbon nanotube is too large (e.g., larger than 50 µm), the functionalized carbon nanotube tends to be entangled, thereby affecting the internal resistance and cycling performance of the secondary battery. The length ratio of the functionalized carbon nanotube is regulated to be within the above range, to effectively improve the manganese dissolution phenomenon of the secondary battery, and improve the problem of the solid electrolyte interfacial film damaged by the metal manganese deposited on the negative electrode, thereby contributing to improving the cycling performance and storage performance of the secondary battery, and reducing the impedance of the secondary battery.

In some embodiments, a specific surface area of the functionalized carbon nanotube is from 50 m²/g to 2,000 m²/g, and is preferably from 300 m²/g to 1,000 m²/g. The applicant finds that when the specific surface area of the functionalized carbon nanotube is too small (e.g., smaller than 50 m²/g), the number of lone pair electrons on the surface of the functionalized carbon nanotube is reduced, the manganese dissolution phenomenon of the secondary battery is not significantly improved; further, the functionalized carbon nanotube tends to agglomerate, and therefore can hardly effectively capture the Mn²⁺; and still further, contact sites between the functionalized carbon nanotube and the manganese-containing active material will be reduced, thereby increasing the internal resistance of the secondary battery. When the specific surface area of the functionalized carbon nanotube is too large (e.g., larger than 100 nm), the functionalized carbon nanotube tends to be entangled, thereby affecting the internal resistance and cycling performance of the secondary battery. The specific surface area of the functionalized carbon nanotube is regulated to be within the above range, to improve the problem of the solid electrolyte interfacial film damaged by the metal manganese deposited on the negative electrode, and effectively improve the manganese dissolution phenomenon of the secondary battery, thereby contributing to improving the cycling performance and storage performance of the secondary battery, and reducing the impedance of the secondary battery.

In some embodiments, the manganese-containing active material comprises particles with Dv50 from 50 nm to 99 nm that can be intercalated in a tube cavity of the functionalized carbon nanotube. It is understandable that the particles with Dv50 from 50 nm to 99 nm can be intercalated in the tube cavity of the functionalized carbon nanotube, thereby contributing to capturing the dissolved Mn²⁺ by the functionalized carbon nanotube, forming a coordination structure therewith, and improving the cycling performance of the secondary battery. In the present application, the particles of the manganese-containing active material being intercalated in the tube cavity of the functionalized carbon nanotube may be that a part of particles of the manganese-containing active material are intercalated in the tube cavity of the functionalized carbon nanotube, or may be that all particles of the manganese-containing active material are intercalated in the tube cavity of the functionalized carbon nanotube, and is preferably that a part of particles of the manganese-containing active material are intercalated in the tube cavity of the functionalized carbon nanotube, thereby contributing to improving the cycling performance of the secondary battery, whilst making the secondary battery have high energy density.

In some embodiments, the manganese-containing active material comprises at least one of LiCoₓ₁Mn_{y1}Ni_{1-x1-y1}O₂, x₂Li[Li_{1/3}Mn_{2/3}]O₂(1-x₂)LiMO₂, LiMn₂O₄, or LiNi_{0.5}Mn_{1.5}O₄, where 0<x1<1, 0<y1<1, 0<x1+y1<1, 0≤x₂≤1, and M is Ni, Co, or Mn. The above manganese-containing active material is selected, thereby contributing to forming a synergistic effect with the functionalized carbon nanotube, improving the manganese dissolution phenomenon of the secondary battery, and then improving the cycling performance of the secondary battery.

In the present application, the method for preparing a functionalized carbon nanotube is not particularly limited, as long as the objective of the present application can be achieved. For example, the method for preparing a functionalized carbon nanotube may include, but is not limited to, preparation steps of: mixing a carbon nanotube with a functional group precursor, ultrasonically dispersing the mixture for reaction in a water bath at 60 °C-130 °C, and then obtaining the functionalized carbon nanotube by washing, suction filtration, and drying.

A second aspect of the present application provides a positive electrode plate, comprising a positive electrode material layer, the positive electrode material layer comprising the positive electrode material in the first aspect of the present application, where a percentage mass content of the manganese-containing active material is from 95.7% to 96.05%, and a percentage mass content of the functionalized carbon nanotube is from 0.05% to 0.4%, based on a mass of the positive electrode material layer. The percentage mass content of the manganese-containing active material and the percentage mass content of the functionalized carbon nanotube are regulated to be within the above range, thereby contributing to improving the manganese dissolution phenomenon of the secondary battery, and improving the cycling performance of the secondary battery. Further, due to good conductivity, the functionalized carbon nanotube has the effect of a conductive agent, and can reduce a use amount of a conductive agent in the positive electrode material layer.

In addition, the secondary battery, the battery module, the battery pack, and the electrical apparatus in the present application are described below with reference to the drawings as appropriate.

In an embodiment of the present application, a secondary battery is provided, comprising the positive electrode plate according to any one of the above embodiments. A secondary battery of the present application may refer to the secondary battery according to any one of the above embodiments.

Generally, the secondary battery comprises a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode, while allowing ions to pass through.

### [Positive electrode plate]

The positive electrode plate further comprises a positive electrode current collector and a positive electrode material layer provided on at least one surface of the positive electrode current collector. As an example, the positive electrode current collector has two surfaces opposite in its own thickness direction, and the positive electrode material layer is provided on either one or both of the two opposite surfaces of the positive electrode current collector.

In some embodiments, the positive electrode current collector can be a metal foil or a composite current collector. For example, an aluminum foil can be used as the metal foil. The composite current collector can comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode material layer further preferably comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode material layer further preferably comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode plate may be prepared by: dispersing the above ingredients, such as the positive electrode material, the conductive agent, the binder, and any other ingredient, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

### [Negative electrode plate]

The negative electrode plate comprises a negative electrode current collector and a negative electrode material layer provided on at least one surface of the negative electrode current collector, and the negative electrode material layer comprises a negative electrode material.

As an example, the negative electrode current collector has two surfaces opposite in its own thickness direction, and the negative electrode material layer is provided on either one or both of the two opposite surfaces of the negative electrode current collector.

In some embodiments, the negative electrode current collector can be a metal foil or a composite current collector. For example, a copper foil can be used as the metal foil. The composite current collector may comprise a polymer material substrate layer and a metal layer formed on at least one surface of a polymer material substrate. The composite current collector may be formed by forming a metal material (such as copper, copper alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, a negative electrode material for a battery well-known in the art may be used as the negative electrode material. As an example, the negative electrode material may include at least one of: artificial graphite, natural graphite, soft carbon, hard carbon, a silicon-based material, a tin-based material, lithium titanate, and the like. The silicon-based material is preferably at least one selected from the group consisting of elemental silicon, silicon-oxygen compound, silicon-carbon composite, silicon-nitrogen composite, and silicon alloy. The tin-based material is preferably at least one selected from the group consisting of elemental tin, tin-oxygen compound, and tin alloy. However, the present application is not limited to these materials, and other conventional materials useful as negative electrode materials for batteries can also be used. These negative electrode materials may be used alone or in combination of two or more thereof.

In some embodiments, the negative electrode material layer further preferably comprises a binder. The binder is preferably at least one selected from the group consisting of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode material layer further preferably comprises a conductive agent. The conductive agent is preferably at least one selected from the group consisting of superconducting carbon, acetylene black, carbon black, Ketjen black, carbon dot, carbon nanotube, graphene, and carbon nanofiber.

In some embodiments, the negative electrode material layer further preferably comprises other adjuvants, for example, a thickener (such as sodium carboxymethylcellulose (CMC-Na)).

In some embodiments, the negative electrode plate may be prepared by: dispersing the above ingredients, such as the negative electrode material, the conductive agent, the binder, and any other ingredient, for preparing the negative electrode plate in a solvent (such as deionized water) to form a negative electrode slurry; and coating the negative electrode slurry on the negative electrode current collector, drying, and cold pressing, to provide the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt is preferably at least one selected from the group consisting of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent is preferably at least one selected from the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further preferably comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator with a porous structure having good chemical stability and mechanical stability may be selected.

In some embodiments, the material of the separator is preferably at least one selected from the group consisting of glass fiber, non-woven cloth, polyethylene, polypropylene, and polyvinylidene fluoride. The separator may be a single-layer film or a multi-layer composite film, which is not particularly limited. When the separator is a multilayer composite film, the material in each layer may be identical or different, which is not particularly limited.

In some embodiments, the positive electrode plate, the negative electrode plate, and the separator can be made into an electrode assembly by a winding process or a stacking process.

In some embodiments, the secondary battery may comprise an outer package. The outer package can be used to encapsulate the above-mentioned electrode assembly and electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft pack may be a plastic, and examples of the plastic include polypropylene, polybutylene terephthalate and polybutylene succinate, etc.

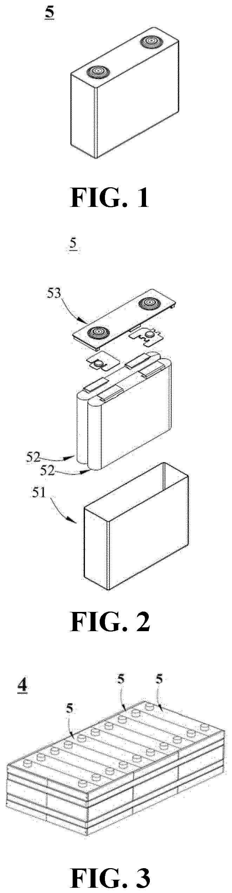

The shape of the secondary battery is not particularly limited in the present application, and may be a cylinder, a square, or any other shape. For example, Fig. 1 shows a secondary battery 5 with a square structure as an example.

In some embodiments, referring to Fig. 2, the outer package may comprise a case 51 and a cover plate 53. Here, the case 51 can include a bottom plate and a side plate connected to the bottom plate, where the bottom plate and the side plate enclose to form an accommodating cavity. The case 51 has an opening that communicates with the accommodating cavity, and the cover plate 53 can cover the opening to close the accommodating cavity. The positive electrode plate, the negative electrode plate, and the separator may form an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art based on the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. Further, the plurality of secondary batteries 5 may be fixed by fasteners.

Preferably, the battery module 4 may further include a shell having an accommodating space, in which the plurality of secondary batteries 5 are accommodated.

In some embodiments, the battery modules may be further assembled into a battery pack, the number of battery modules comprised in the battery pack may be one or more, and the specific number may be selected by those skilled in the art based on the application and capacity of the battery pack.

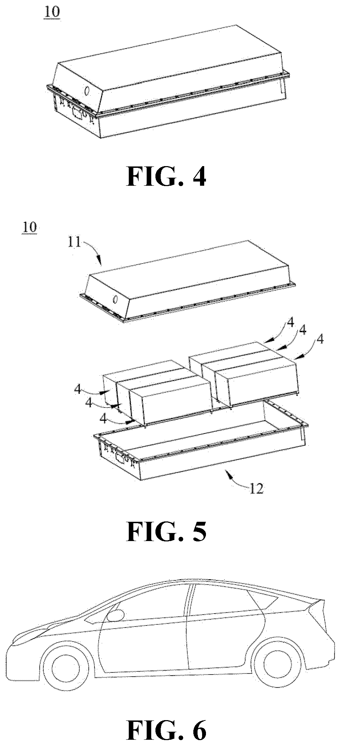

Fig. 4 and Fig. 5 are a battery pack 10 as an example. Referring to Fig. 4 and Fig. 5, the battery pack 10 may comprise a battery box and a plurality of battery modules 4 provided in the battery box. The battery box comprises an upper box 11 and a lower box 12, where the upper box 11 can cover the lower box 12 and forms an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the electrical apparatus, the secondary battery, the battery module, or the battery pack may be selected according to its use requirements.

Fig. 6 is an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described below. The examples described below are illustrative, are merely used to explain the present application, and should not be construed as limitation on the present application. Where no specific techniques or conditions are specified in the examples, the techniques or conditions described in literatures of the art or the product specifications are prevailing. Where manufacturers are not specified, the reagents or instruments used are conventional products and are commercially available.

### Example 1-1

### <Preparation of a functionalized carbon nanotube>

5 g of a single-walled carbon nanotube was added into 450 mL of a mixed acid, and was ultrasonically sufficiently dispersed. Then, the mixture was refluxed in a water bath at 70 °C for reaction for 6 h. After the reaction was complete, the mixture was diluted with deionized water, suction filtered, washed to neutral, and then vacuum dried at 60 °C for 24 h, to provide the functionalized carbon nanotube as a carboxylated carbon nanotube. The mixed acid was obtained by mixing concentrated sulfuric acid and concentrated nitric acid at a volume ratio of 3:1. Tests showed that the functionalized carbon nanotube has a functionalization degree of 4.5%, a length-diameter ratio from 1,000 to 3,000, a length from 5 µm to 15 µm, a tube diameter from 2 nm to 4 nm, and a specific surface area from 700 m²/g to 900 m²/g.

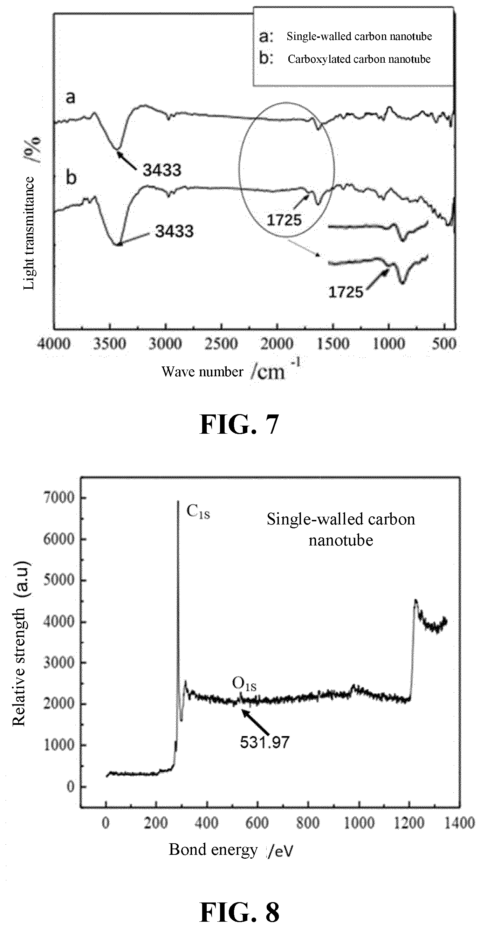

Fig. 7 shows an infrared spectrogram of a single-walled carbon nanotube and the carboxylated carbon nanotube prepared above, where a characteristic peak of the carboxylated carbon nanotube at 1725 cm⁻¹ is a stretching vibration peak of -C=O, while the uncarboxylated single-walled carbon nanotube has a very weak characteristic peak here. A stretching vibration peak of -OH is at 3433 cm⁻¹, and the characteristic peak intensity increases after carboxylation. All the above phenomena indicate that the carboxylated carbon nanotube is successful prepared.

### <Preparation of a positive electrode plate>

The functionalized carbon nanotube prepared above was added into N-methyl pyrrolidinone (NMP) to obtain a dispersion of the functionalized carbon nanotube with a solid content of 5 wt%. A manganese-containing active material LiMn₂O₄, the dispersion of the functionalized carbon nanotube, a conductive agent carbon black, and a binder polyvinylidene fluoride (PVDF) were mixed, where a mass ratio of the manganese-containing active material, the functionalized carbon nanotube, the conductive agent, and the binder was 96:0.1:2.6:1.3, and then NMP was added as a solvent. The mixture was stirred using a vacuum mixer until the system was uniform, to obtain a positive electrode slurry with a solid content of 70 wt%. The positive electrode slurry was uniformly coated on a surface of an aluminum foil with a thickness of 13 µm, dried at 90 °C, and cold pressed to obtain a double-sided positive electrode plate with a thickness of a positive electrode material layer of 110 µm. Then, the positive electrode plate was obtained by, e.g., tab molding and cutting. A mass ratio of the functionalized carbon nanotube to the manganese-containing active material was from 0.001:1.

### <Preparation of a negative electrode plate>

A negative electrode material artificial graphite, a conductive agent conductive carbon black, a binder styrene butadiene rubber (SBR), and a thickener carboxymethyl cellulose (CMC) at a mass ratio of 96:0.9:1.6:1.5 were mixed, into which deionized water was added as a solvent. The mixture was stirred using a vacuum mixer until the system was uniform, to obtain a negative electrode slurry with a solid content of 54 wt%. The negative electrode slurry was uniformly coated on a surface of a copper foil with a thickness of 8 µm, dried at 110 °C, and cold pressed to obtain a double-sided negative electrode plate with a thickness of a negative electrode material layer of 110 µm. Then, the negative electrode plate was obtained by, e.g., tab molding and cutting.

### <Preparation of an electrolyte solution>

Ethylene carbonate, ethyl methyl carbonate, and diethyl carbonate were mixed at a volume ratio of 1:1:1 in an environment with a water content less than 10 ppm, to obtain a solvent of an electrolyte solvent, and then LiPF₆ was dissolved in the mixed solvent to prepare an electrolyte solution with a lithium salt concentration of 1 mol/L.

### <Preparation of a separator>

A polyethylene film with a thickness of 14 µm was selected as the separator, and was cut into an appropriate size according to a size of the positive electrode plate and a size of the negative electrode plate prior to use.

### <Preparation of a lithium-ion battery>

The positive electrode plate, the separator, and the negative electrode plate were sequentially stacked, such that the separator was located between the positive electrode plate and the negative electrode plate to function for separation, and then winded to obtain an electrode assembly. The electrode assembly was placed in an outer package shell, and dried. Then, the electrolyte solution was injected. The lithium-ion battery was obtained by, e.g., vacuum encapsulation, standing, formation, and shaping.

### Example 1-2 to Example 1-6

These examples are same as Example 1-1 except that the percentage mass content of the manganese-containing active material and the percentage mass content of the functionalized carbon nanotube were adjusted in accordance with Table 1.

### Example 1-7

The example is same as Example 1-1 except that the functionalized carbon nanotube was prepared as follows:
(1) 5 g of the carboxylated carbon nanotube prepared in Example 1-1 was added into 450 mL of SOCl₂, and was ultrasonically sufficiently dispersed. Then, the mixture was refluxed at 70 °C for reaction for 6 h. After the reaction was complete, the mixture was diluted with ethanol, suction filtered, repeatedly washed many times, and finally vacuum dried at 60 °C for 24 h, to provide an acylated carbon nanotube.
(2) 5 g of the acylated carbon nanotube was added into 500 mL of ethanediamine, ultrasonically sufficiently dispersed, and then refluxed at 120 °C for reaction for 6 h. After the reaction was complete, the mixture was diluted with ethanol, suction filtered, repeatedly washed many times, and finally vacuum dried at 60 °C for 24 h, to provide an aminated carbon nanotube.

### Example 1-8

The example is same as Example 1-1, except that the carboxylated carbon nanotube prepared in Example 1-1 and the amidated carbon nanotube prepared in Example 1-7 were mixed at a mass ratio of 1:1 to provide the functionalized carbon nanotube, and the percentage mass content of the carboxylated carbon nanotube and the percentage mass content of the amidated carbon nanotube the carboxylated carbon nanotube were both 0.1%.

### Example 2-1 to Example 2-6

These examples are same as Example 1-1 except that the reflux reaction time in the <Preparation of a functionalized carbon nanotube> was sequentially adjusted to 0.5 h, 3 h, 7 h, 9 h, 0.2 h, and 12 h, so that the functionalization degree of the carbon nanotube was as shown in Table 2.

### Example 3-1 to Example 3-5

These examples are same as Example 1-1 except that the carbon nanotube type in the <Preparation of a functionalized carbon nanotube> was adjusted so that the length-diameter ratio, the length, the tube diameter, and the specific surface area of the functionalized carbon nanotube were as shown in Table 3.

### Example 4-1 to Example 4-4

These examples are same as Example 1-1 except that the positive electrode material was adjusted according to Table 4.

### Comparative Example 1

The comparative example is same as Example 1-1 except that the functionalized carbon nanotube was replaced with a single-walled carbon nanotube.

The preparation parameters and performance tests in the comparative example and the examples are as shown in Table 1 to Table 4.

### Capacity retention rate test:

(1) The lithium-ion batteries in the examples and the comparative example were charged to 4.3 V at a constant current of 1/3 C, then charged to a current of 0.05 C at a constant voltage of 4.3 V, laid aside for 5 min, and then discharged to 3.0 V at 1/3 C. The discharge capacity was denoted as C₀;
(2) Then, the above lithium-ion batteries were charged to 4.3 V at a constant current of 1.0 C, laid aside for 5 min, and then discharged to 3.0 V at 1/3 C. The discharge capacity was denoted ass C₁; and

The step (2) was repeated, to record a discharge capacity C₂₀₀ of the lithium-ion batteries after 200-th cycle, and a capacity retention rate of the batteries P₂₀₀=C₂₀₀/C₀×100%.

### Impedance increase rate:

At 25 °C, the batteries were charged to 4.3 V at a constant current of 1/3 C, then charged to a current of 0.05 C at a constant voltage of 4.3 V, and laid aside for 5 min. Then, a voltage V₁ was denoted. Then, the batteries were discharged at 1/3 C for 30 s, and the voltage was denoted as V₂, thus providing an impedance DCR₁ of the lithium-ion batteries after the first cycle. The above steps were repeated 200 times, to provide an impedance DCR₂₀₀ of the lithium-ion batteries after 200-th cycle, and the impedance increase rate=(DCR₂₀₀-DCR₁)/DCR₁×100%.

### Functionalization degree test:

A content of element C, element O, or element N in the carbon nanotube, the carboxylated carbon nanotube, and the aminated carbon nanotube was obtained by X-ray photoelectron spectroscopy (XPS), where an increased content of the element O or the element N is O in the carboxyl or N in the amino, thus computing mass m1 of the carboxyl or the amino in the functionalized carbon nanotube, and the functionalization degree=m1/mass of functionalized carbon nanotube× 100%.

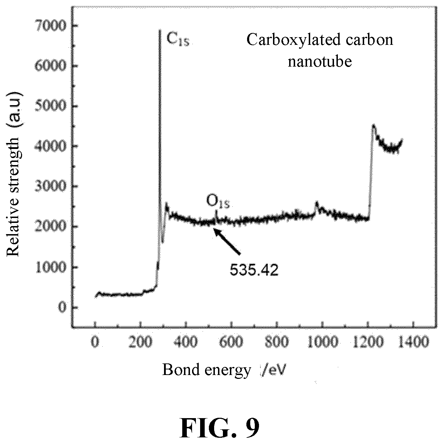

Fig. 8 shows XPS of the single-walled carbon nanotube, and Fig. 9 shows XPS of the carboxylated carbon nanotube prepared in Example 2-3. The information as shown in Table 5 can be obtained according to the analysis software provided by XPS. Assuming that a total mass of the single-walled carbon nanotube is completely donated by the carboxyl and C atoms, the functionalization degree of the carboxylated carbon nanotube (i.e., percentage mass content of the carboxyl) is computed as follows:
The functionalization degree of the carboxylated carbon nanotube=(0.004×45)/[(0.004×45)+(1-0.004)×12]=0.15%, where a molar mass of the carboxyl is 45 and a relative atomic mass of the C atom is 12. The computation in other examples is similar to the above computation.

It should be noted that a small amount of carboxyl will remain in a preparation process of an existing method for preparing a single-walled carbon nanotube. Therefore, a small amount of carboxyl is also present in the single-walled carbon nanotube. However, a carboxyl content in the carboxylated carbon nanotube increases significantly after carboxylation.

### Test of a tube diameter and a length of the functionalized carbon nanotube:

The test was performed according to the national standard GB/T 26826-2011 (Measurement for diameter of carbon nanotubes).

### Specific surface area test:

The test was performed according to the national standard GBT 19587-2017 (Determination of the specific surface area of solids by gas adsorption using the BET method).

**Table 1**

| | Percentage mass content of manganese-containing active material (%) | Type of functionalized carbon nanotube | Percentage mass content of functionalized carbon nanotube (%) | Mass ratio of functionalized carbon nanotube to manganese-containing active material | Capacity retention rate after 200 cycles at 45 °C (%) | Impedance increase rate after 200 cycles (%) |
|---|---|---|---|---|---|---|
| Example 1-1 | 96 | Carboxylated carbon nanotube | 0.1 | 0.001:1 | 93.1 | 19.2 |
| Example 1-2 | 95.8 | Carboxylated carbon nanotube | 0.3 | 0.003:1 | 92.7 | 20.4 |
| Example 1-3 | 95.7 | Carboxylated carbon nanotube | 0.4 | 0.004:1 | 92.4 | 20.6 |
| Example 1-4 | 96.05 | Carboxylated carbon nanotube | 0.05 | 0.0005:1 | 92.0 | 21.4 |
| Example 1-5 | 96.09 | Carboxylated carbon nanotube | 0.01 | 0.0001:1 | 91.1 | 22.2 |
| Example 1-6 | 95.6 | Carboxylated carbon nanotube | 0.5 | 0.005:1 | 91.9 | 21.5 |
| Example 1-7 | 96 | Aminated carbon nanotube | 0.1 | 0.001:1 | 92.2 | 20.5 |
| Example 1-8 | 95.9 | Carboxylated carbon nanotube+aminated carbon nanotube | 0.1+0.1 | 0.002:1 | 93.3 | 19.8 |
| Comparative Example 1 | 96 | Single-walled carbon nanotube | 0.1 | / | 90.5 | 23.3 |

**Table 2**

| | Functionalization degree of functionalized carbon nanotube (%) | Capacity retention rate after 200 cycles at 45 °C (%) | Impedance increase rate after 200 cycles (%) |
|---|---|---|---|
| Example 1-1 | 4.5 | 93.1 | 19.2 |
| Example 2-1 | 0.1 | 91.2 | 22.1 |
| Example 2-2 | 2 | 91.8 | 21.7 |
| Example 2-3 | 5 | 92.9 | 20.0 |
| Example 2-4 | 6 | 92.6 | 20.5 |
| Example 2-5 | 0.05 | 91.0 | 22.3 |
| Example 2-6 | 8 | 90.8 | 22.4 |

**Table 3**

| | Length-diameter ratio of carbon nanotube | Tube diameter of carbon nanotube (nm) | Length of carbon nanotube | Specific surface area of carbon nanotube (m²/g) | Capacity retention rate after 200 cycles at 45 °C (%) | Impedance increase rate after 200 cycles (%) |
|---|---|---|---|---|---|---|
| Example 1-1 | 1,000-3,000 | 2-4 | 5-15 | 700-900 | 93.1 | 19.2 |
| Example 3-1 | 200-500 | 1-2 | 0.1-1 | 50-300 | 91.5 | 21.3 |
| Example 3-2 | 4,000-8,000 | 1-2 | 5-15 | 900-1,000 | 93.6 | 20.1 |
| Example 3-3 | 8,000-15,000 | 1-2 | 10-25 | 1,200-1,600 | 92.6 | 20.7 |
| Example 3-4 | 100-150 | 0.5-0.9 | 0.05-0.09 | 10-40 | 90.4 | 23.1 |
| Example 3-5 | 21,000-23,000 | 1.5-2 | 30-40 | 2,100-2,500 | 91.0 | 22.0 |

**Table 4**

| | Manganese-containing active material | Capacity retention rate after 200 cycles at 45 °C (%) | Impedance increase rate after 200 cycles (%) |
|---|---|---|---|
| Example 1-1 | LiMn₂O₄ | 92.8 | 20.1 |
| Example 4-1 | LiNi_{0.5}Mn_{1.5}O₄ | 93.4 | 19.6 |
| Example 4-2 | .LiCo_{1/3}Mn_{1/3}Ni_{1/3}O₂. | 93.1 | 19.8 |
| Example 4-3 | 0.6Li[Li_{1/3}Mn_{2/3}]O₂(0.4)LiMO₂ | 91.9 | 20.3 |
| Example 4-4 | LiMn₂O₄+ LiNi_{0.5}Mn_{1.5}O₄ | 93.2 | 20.2 |

**Table 5**

| Type | Peak type | Peak position (ev) | Peak area (cts-ev/s) | Atom number ratio of Ois to C_{1S} | Number ratio of -COOH to C_{1S} | Percentage mass content of carboxyl |
|---|---|---|---|---|---|---|
| Single-walled carbon nanotube | C_{1S} | 284.31 | 11,603 | 0.008:1 | 0.004:1 | 0.15% |
| | O_{1S} | 531.97 | 321 | | | |
| Carboxylated carbon nanotube | C_{1S} | 283.75 | 11726 | 0.28:1 | 0.14:1 | 5% |
| | O_{1S} | 535.42 | 890 | | | |

Referring to Table 1, as can be seen from Example 1-1 to Example 1-8, and Comparison Example 1, the lithium-ion batteries comprising the functionalized carbon nanotube have higher cycle capacity retention rate and lower impedance increase rate, i.e., the lithium-ion batteries have better cycling performance. As can be seen from Example 1-1 to Example 1-6, the resulting lithium-ion batteries have better cycling performance when the percentage mass content of the manganese-containing active material, the percentage mass content of the functionalized carbon nanotube, and the mass ratio of the functionalized carbon nanotube to the manganese-containing active material are within the scope of the present application. As can be seen from Example 1-1 to Example 1-8, the resulting lithium-ion batteries have better cycling performance when the functionalized carbon nanotube provided in the present application is selected.

Referring to Table 2, as can be seen from Example 1-1, and Example 2-1 to Example 2-6, the resulting lithium-ion batteries have better cycling performance when the functionalization degree of the functionalized carbon nanotube is within the scope of the present application.

The length-diameter ratio, the length, the tube diameter, and the specific surface area of the functionalized carbon nanotube generally affect the performance of the lithium-ion batteries. Referring to Table 3, as can be seen from Example 1-1, and Example 3-1 to Example 3-5, the resulting lithium-ion batteries have better cycling performance when the length-diameter ratio, the length, the tube diameter, and the specific surface area of the functionalized carbon nanotube are within the scope of the present application.

The type of the manganese-containing active material generally affects the performance of the lithium-ion batteries. Referring to Table 4, as can be seen from Example 1-1 and Example 4-1 to Example 4-4, the resulting lithium-ion batteries have better cycling performance when the manganese-containing active material provided in the present application is selected.

The above description only provides better examples of the present application, and is not intended to limit the present application. Any modification, equivalent replacement, improvement, and the like made within the spirit and principles of the present application should be included within the scope of protection of the present application.

## Claims

1. A positive electrode material, comprising a manganese-containing active material and a functionalized carbon nanotube, a surface of the functionalized carbon nanotube comprising lone pair electrons.

2. The positive electrode material according to claim 1, wherein a mass ratio of the functionalized carbon nanotube to the manganese-containing active material is from 0.0005:1 to 0.004:1, and is preferably from 0.001:1 to 0.003:1.

3. The positive electrode material according to claim 1, wherein the functionalized carbon nanotube includes a carboxylated carbon nanotube and/or an aminoated carbon nanotube.

4. The positive electrode material according to claim 1, wherein a functionalization degree of the functionalized carbon nanotube is from 0.1% to 6%, and is preferably from 2% to 5%.

5. The positive electrode material according to claim 1, wherein a length-diameter ratio of the functionalized carbon nanotube is from 200 to 20,000, and is preferably from 1,000 to 5,000.

6. The positive electrode material according to claim 1, wherein a tube diameter of the functionalized carbon nanotube is from 1 nm to 100 nm, and is preferably from 3 nm to 80 nm.

7. The positive electrode material according to claim 1, wherein a length of the functionalized carbon nanotube is from 0.1 µm to 50 µm, and is preferably from 3 µm to 30 µm.

8. The positive electrode material according to claim 1, wherein a specific surface area of the functionalized carbon nanotube is from 50 m²/g to 2,000 m²/g, and is preferably from 300 m²/g-1,000 m²/g.

9. The positive electrode material according to claim 1, wherein the manganese-containing active material comprises particles with Dv50 from 50 nm to 99 nm that can be intercalated in a tube cavity of the functionalized carbon nanotube.

10. The positive electrode material according to claim 1, wherein the manganese-containing active material comprises at least one of LiCoₓ₁Mn_{y1}Ni_{1-x1-y1}O₂, x₂Li[Li_{1/3}Mn_{2/3}]O₂(1-x₂)LiMO₂, LiMn₂O₄, or LiNi_{0.5}Mn_{1.5}O₄, wherein 0<x1<1, 0<y1<1, 0<x1+y1<1, 0<x2<1, and M is Ni, Co, or Mn.

11. A positive electrode plate, comprising a positive electrode material layer, the positive electrode material layer comprising the positive electrode material according to any one of claims 1-10, wherein a percentage mass content of the manganese-containing active material is from 95.7% to 96.05%, and a percentage mass content of the functionalized carbon nanotube is from 0.05% to 0.4%, based on a mass of the positive electrode material layer.

12. A secondary battery, comprising the positive electrode plate according to claim 11.

13. A battery module, comprising the secondary battery according to claim 12.

14. A battery pack, comprising the battery module according to claim 13.

15. An electrical apparatus, comprising the secondary battery according to claim 12, the battery module according to claim 13, or the battery pack according to claim 14.
